(19) Europäisches Patentamt
European Patent Office
Office européen des brevets

(11) EP 0 636 150 B1

(12) # FASCICULE DE BREVET EUROPEEN

(45) Date de publication et mention de la délivrance du brevet:
**13.05.1998 Bulletin 1998/20**

(21) Numéro de dépôt: **94906240.0**

(22) Date de dépôt: **03.02.1994**

(51) Int Cl.[6]: **C08F 8/20**, C08F 220/24, C08F 220/56, C08F 220/60, C08F 222/18, A62D 1/02, B01F 17/22, B01F 17/34, B01F 17/52

(86) Numéro de dépôt international:
**PCT/FR94/00129**

(87) Numéro de publication internationale:
**WO 94/18245 (18.08.1994 Gazette 1994/19)**

(54) **TENSIOACTIFS FLUORES ALCO-OLEOPHOBES, LEURS OBTENTIONS ET LEURS APPLICATIONS**

ALKO- UND OLEOPHOBE, FLUORHALTIGE NETZMITTEL UND VERFAHREN ZU IHRER HERSTELLUNG, SOWIE IHRE VERWENDUNG

NOVEL OIL AND ALCOHOL REPELLENT FLUORINATED SURFACTANTS DERIVATES AND USES THEREOF

(84) Etats contractants désignés:
**DE ES FR GB IT**

(30) Priorité: **11.02.1993 FR 9301749**

(43) Date de publication de la demande:
**01.02.1995 Bulletin 1995/05**

(60) Demande divisionnaire: **97112933.3 / 0 832 884**

(73) Titulaires:
- **SZONYI, Istvan**
  **F-98000 Monte-Carlo (MC)**
- **SZONYI, Stéphane**
  **F-06300 Nice (FR)**
- **SZONYI, François**
  **MC-98000 Monte Carlo (MC)**

(72) Inventeurs:
- **SZONYI, Istvan**
  **F-98000 Monte-Carlo (MC)**
- **SZONYI, Stéphane**
  **F-06300 Nice (FR)**
- **SZONYI, François**
  **MC-98000 Monte Carlo (MC)**

(56) Documents cités:
**WO-A-90/03966**
**FR-A- 2 438 484**
**US-A- 4 089 804**

EP 0 636 150 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

La présente invention concerne de nouveaux tensioactifs polyperfluoroalkylés, hydrosolubles dérivés de polymères fonctionnels polycarboxyliques ne contenant pas d'atome d'azote quaternaire organique, ayant des propriétés non seulement oléophobes, mais fortement alcophobes, utilisables seuls ou avec des émulseurs ayant une base moussante synthétique ou protéinique pour la lutte contre les feux de liquides polaires ou d'hydrocarbures.

On voit depuis quelques décennies que des tensioactifs perfluoroalkylés sont utilisés dans la fabrication des mousses extinctrices. Ces produits fluorés rendent la mousse oléophobe, de telle sorte qu'ils la protègent contre la contamination par les hydrocarbures et donc renforcent son efficacité extinctrice sur feux d'hydrocarbures.

En revanche, toutes ces mousses sont inefficaces contre les feux de liquides polaires ; elles se détruisent au simple contact avec les liquides déshydratants tels que les alcools, cétones etc.. Ces tensioactifs ne sont pas alcophobes.

Pour lutter contre les feux de liquides polaires, il a été proposé (DP-697646/1940) d'incorporer des sels complexes, tels que par exemple le caprylate de zinc ammoniacal, dans une solution de protéines hydrolysées. Ces mousses ont une certaine résistance contre les feux d'alcool , mais leur résistance contre les feux d'hydrocarbures est considérablement affaiblie à cause de la présence de savons gras. On peut pallier ce défaut par l'adjonction de tensioactifs fluorés oléophobes connus dans le commerce. Néanmoins il subsiste encore un inconvénient majeur : ces émulseurs étant dilués dans l'eau pour leur emploi, s'hydrolysent en quelques minutes et perdent leurs propriétés moussante et extinctrice.

Afin que la qualité de l'émulseur soit préservée lors du prémélange, il a été proposé de remplacer dans le concentré le sel complexe ammoniacal par des polymères de type polysaccharide ; et pour renforcer la résistance de la mousse contre les feux d'hydrocarbures, on incorpore un tensioactif fluoré oléophobe (U.S. 4060489 ; FR 2 475 926). Ces liquides émulseurs sont largement répandus dans le commerce. Ils sont préparés avec une base moussante synthétique ou protéinique et sont appelés émulseurs pseudoplastiques à cause de leur comportement rhéologique. En général leur efficacité extinctrice est remarquable sur feux de liquides polaires et d'hydrocarbures ; mais la viscosité du concentré rend sa mise en oeuvre difficile, surtout à basse température.

Le brevet FR 2 637 506 des mêmes auteurs propose d'améliorer la fluidité des émulseurs pseudoplastiques par diminution de la teneur en polysaccharide dans le concentré et par adjonction d'une polyamine quaternaire perfluoroalkylée réactive (brevet FR 2 637 590 des mêmes auteurs) dans le but de transformer le polysaccharide en une substance fluorée résistant aux feux de liquides polaires et d'hydrocarbures.

On a déjà proposé d'autres polymères pour résister contre les feux d'alcools ; par exemple le sel du copolymère d'éther méthylique de vinyl et d'anhydride maléique. L'inconvénient de ces dernirers réside dans le fait qu'il faut en utiliser une quantité très importante dans la solution moussante ce qui rend sa mise en oeuvre difficile, pour un résultat très faible.

Le brevet US 2378629 et Australien n° 40709-72 proposent un dérivé alkylamidé du copolymère cité précédemment pour remplacer la protéine hydrolysée dans la mousse extinctrice. Ces mousses sont inefficaces sur feux de liquides polaires et médiocres sur feux d'hydrocarbures.

Plusieurs brevets proposent des polyacrylamides monoperfluoroalkyles en position oméga pour stabiliser les mousses protéiniques contre les feux d'hydrocarbures ; mais ces mousses sont inefficaces sur les feux de liquides polaires.

On trouve dans le commerce les trois types de ces composés polyacrylamides perfluoroalkylés suivants:

$$R_F - C_2H_4 - S(CH_2 - \underset{CONH_2}{\underset{|}{CH}})_n - H$$

$$R_F - (CH_2 - \underset{CONH_2}{\underset{|}{CH}})_n - I$$

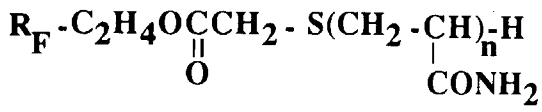

Le brevet JP 04 126 709 décrit un copolymère d'alkenyl ether et d'anhydride maléique perfluoroalkylé dans lequel le groupement fluoré est placé sur la chaine carbonée mais n'est pas lié au groupement carboxyle. Ce produit est destiné à l'hydrofugation; il n'est donc pas utilisable pour la préparation de mousses aqueuses.

Le brevet JP 03 243 609 fait réagir l'acide polyacrylique et le dihydroperfluorooctylamine pour donner un produit hydrofugant. L'atome d'azote de l'amide obtenu ne porte pas de groupement hydrophile nécessaire pour favoriser l'alcophobie et la solubilité dans l'eau.

Les tensioactifs fluorés qui sont à la fois alcophobes et oléophobes sont décrits dans les brevets FR 2 636 334 ; FR 2 637 590 ; FR 2 637 506 des mêmes auteurs ; leur qualité est appréciable, mais du fait que ces molécules contiennent nécessairement un atome d'azote quaternaire, leur compatibilité avec les agents tensioactifs anioniques et les dérivés protéiniques reste limitée.

Pour pallier tous les inconvénients énumérés ci-dessus, nous avons cherché à synthétiser selon l'invention de nouveaux tensioactifs fluorés à la fois alcophobes et oléophobes, compatibles avec des agents tensioactifs anioniques et les dérivés protéiniques . Ainsi la nouveauté des produits selon l'invention, par rapport aux tensioactifs connus, réside dans le fait qu'ils sont alco-oleophobes, compatibles avec des agents tensioactifs anioniques et les dérivés protéiniques, que ces macromolécules sont munies de plusieurs groupement perfluoroalkylés et ne contiennent pas d'atome d'azote quaternaire organique; les radicaux portant un groupement perfluoroalkylé sont liés aux fonctions carboxyliques appartenant au polymère par une liaison ester ou amide; l'atome d'azote porte un groupement hydrophile pour favoriser l'alcophobie. Les exemples suivants servent à illustrer les différents modes d'exécution de l'invention

Exemple 1: Préparation du polymère constitué des motifs suivants :

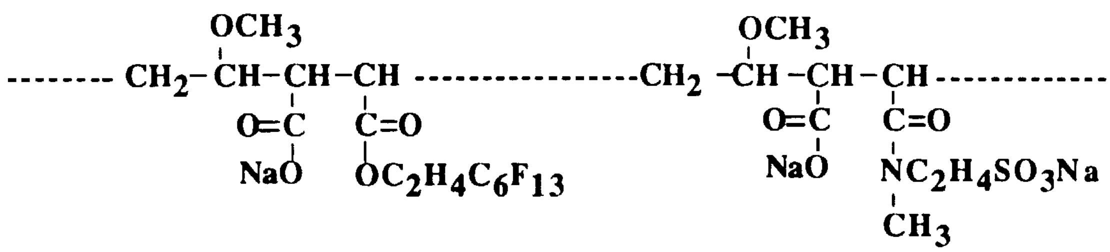

Dans un ballon muni d'un réfrigérant et d'un agitateur on dissout 15,6 g (0,1 mole d'unité du polymère ) de copolymère d'éther méthylique de vinyle et d'anhydride maléique (Poids moléculaire ≈ 25000) dans 35 g de diméthylformamide à la température de 30°C. On ajoute 12 g (0,04 mole) de perfluorohexyl éthanol et on chauffe à 70°C en mélangeant pendant une nuit (10 à 15 heures).

On laisse refroidir à 30°C et on ajoute 36 g de N-méthyl-taurinate de sodium technique, environ 62-65% (= 0,14 mole). La réaction est exothermique, le mélange se réchauffe à 60°C et épaissit. On mélange environ une demi-heure et on verse 97 ml d'eau.

On obtient 195 g d'une solution visqueuse de pH 8, parfaitement soluble dans l'eau et contenant environ 25% de matière active.

Tension superficielle à 0,1% : 20 dynes/cm mN/m
Tension superficielle à 0,01% : 40 dynes/cm "
Tension interfaciale à 0,1% : 6 dynes/cm "
Valeur de l'alcophobie: 10 secondes.

Exemple 2 : Préparation du polymère constitué des motifs suivants:

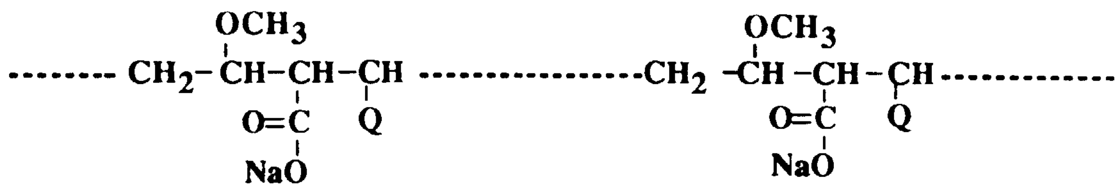

Q =

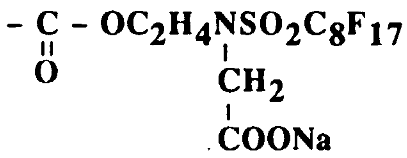 , 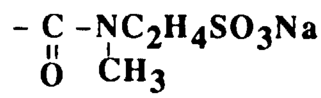 ,

-COONa,

$-CO(OC_2H_4)_3OC_4H_9$ et 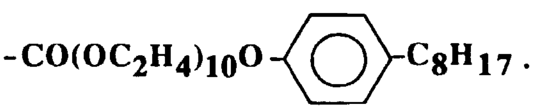

Dans un réacteur muni d'un réfrigérant, d'un agitateur et d'une ampoule à brome, on pèse 3,70 g (0,060 mole) de monoéthanolamine et 6,60 g (0,067 mole) de triéthylamine, qui sont dissous dans 25 g de diméthylformamide. Ensuite à une température ne dépassant pas 40°C, on ajoute goutte à goutte 30 g (0,060 mole) de fluorure de perfluorooctyl sulfonyle. Après addition, le mélange est agité pendant 1 heure à 40°C et 2 heures à 80°C. On ajoute ensuite 7 g (0,060 mole) de monochloroacétate de sodium et on mélange à 70-75°C pendant 5 heures.

On obtient 72 g de solution contenant environ 50% de matière active répondant à la formule suivante :

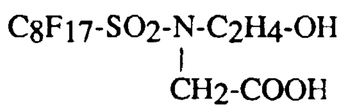

pH = 3,70.

Tension superficielle à 0,1% : 19,3 dynes/cm mN/m

Tension superficielle à 0,02% : 25,4 dynes/cm "

Tension interfaciale à 0,1% : 5 dynes/cm. "

En refroidissant la solution donne des cristaux de sels de chlorure et fluorure de triéthylamine en abondance. Le résidu est filtré et lavé avec 15 g de DMF. On obtient 72 g de solution contenant environ 50% de matière active.

On pèse 33,6 g de solution obtenue précédemment (contenant 0,028 mole de fluorure de perfluoro octyl sulfonyle) que l'on dilue avec 30 g de diméthylformamide ; puis on dissout dans le mélange 22 g (0,141 mole) de copolymère d'éther méthylique de vinyl et d'anhydride maléique. Le mélange est agité et chauffé à 40°C ; la température de la solution par effet exothermique remonte à 115°C. On mélange alors pendant 4 heures à 100-110°C. On verse ensuite dans le mélange 9 g (0,043 mole) de butyltriglycol, 10 g (0,015) mole d'octylphenol 10 ethoxylé (OP 10)) et 0,40 g de $H_2SO_4$ concentré. Le mélange est encore chauffé pendant 5 heures à 105-110°C (la première heure de la réaction est sensiblement exothermique).On laisse refroidir le mélange à 20-25°C et on ajoute 44 g (0,174 mole) de N-méthyl taurinate de sodium technique ( environ 62-65%). La température du mélange remonte alors à 60°C par effet exothermique. La solution est mélangée encore pendant 30 minutes ; 51 g d'eau sont ensuite versés et le mélange est chauffé 30 minutes à 50°C. La solution obtenue pèse 200 g et contient environ 40% de matière active. Son pH est 8,5 et sa densité 1,17.

Tension superficielle à 0,1% : 17,6 dynes/cm mN/m
Tension superficielle à 0,01% : 41,1 dynes/cm. "
Tension interfaciale à 0,1% : 6 dynes/cm. "
Valeur de l'alcophobie: 15 secondes.

Exemple 3 : préparation du polymère constitué des motifs suivants:

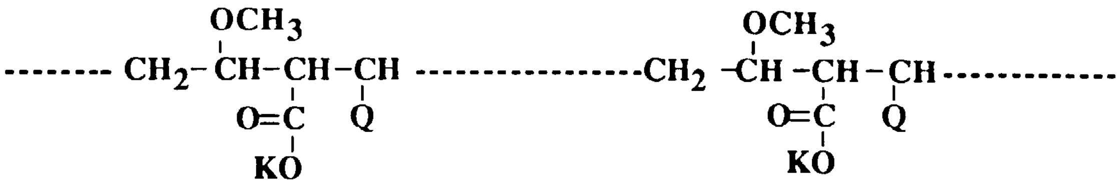

Q =

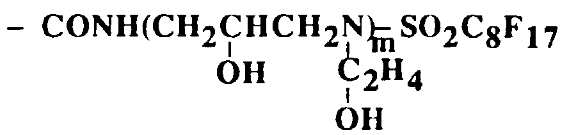

avec m = 2-4, -COOK, et $-CONH_2$ .

*Intermédiaire (a) :*

Dans un réacteur muni d'un mélangeur à hélice et d'un reflux réfrigérant, on pèse 50 g (0,32 mole) de copolymère d'éther méthylique de vinyl et d'anhydride maléique et on verse 100 ml d'eau suivis de 100 g d'ammoniaque à 20% (1,17 mole). Le mélange est agité et refroidi pendant 2 heures puis est abandonné toute une nuit sans agitation. Le lendemain, la solution se présente sous la forme d'un liquide visqueux et homogène, sans formation de grumeaux. Son poids total est de 250 g, il contient 20% de polymère, calculé sur l'anhydride.

*Intermédiaire (b)*

Dans un réacteur, on introduit 18,3 g (0,30 mole) de monoéthanolamine, dissous dans 20 g de diméthylformamide et on verse goutte à goutte en mélangeant et en refroidissant 50 g (0,10 mole) de fluorure de perfluoro octyl sulfonyle. L'addition dure environ 1 heure, en maintenant la température entre 20 et 30°C ; on continue à mélanger encore 3 heures à 30-40°C et on ajoute 84 ml d'eau. Ensuite on verse lentement tout en mélangeant et en refroidissant 27,8 g (0,30 mole) d'épichlorhydrine du glycerol. L'addition dure environ une demi-heure en maintenant le mélange à 35-40°C. La solution est mélangée encore 3 heures à 35-40°C.

On prépare une solution de KOH concentrée (30 g de KOH technique et 30 g de $H_2O$ correspondant environ à 0,46 mole de KOH) et après avoir refroidi le mélange à 30 ou 40°C, on l'incorpore au mélange décrit plus haut.

On continue de mélanger environ 10 heures à la température de 70°C. On obtient environ 260 g de produit liquide, qui a tendance à se séparer en deux phases.

*Réaction des deux intermédiaires (a) et (b) :*

Dans le réacteur contenant les 260 g de produit (b) on verse, tout en mélangeant 250 g de produit (a) contenant 0,32 mole de polymère. On continue à mélanger pendant 15 heures environ à la température de 90°C. On ajoute ensuite 600 ml d'eau et 90 g de butyldiglycol. La solution obtenue pèse 1200 g , contient environ 10% de matière active et est parfaitement soluble dans l'eau. Son pH est environ 9.

Tension superficielle à 0,1% : 18 dynes/cm mN/m
Tension superficielle à 0,01% : 30 dynes/cm "

Tension interfaciale à 0,1% : 5 dynes/cm "
Valeur de l'alcophobie : 30 secondes.

Exemple 4 : Préparation du polymère constitué des motifs suivants:

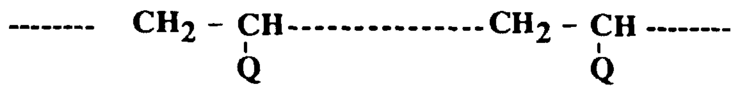

Q =

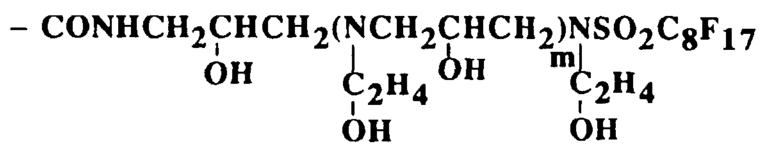

avec m = 0-2 et $-CONH_2$ .

Dans un réacteur sont placés 130 g de solution obtenue selon l'exemple n°3 (intermédiaire b) , contenant 0,05 mole de reste perfluorooctyl et on ajoute 125 g de solution aqueuse de polyacrylamide à 20%. On mélange ensuite pendant 18 heures à la température de 90°C. Ensuite on ajoute 300 ml d'eau et 45 g de butyldiglycol. La solution obtenue pèse 600 g, contient environ 10% de matière active. Son pH est 8.

Tension superficielle à 0,1% : 19 dynes/cm mN/m
Tension superficielle à 0,01% : 40 dynes/cm "
Tension interfaciale à 0,1% : 6 dynes/cm. "
Valeur de l'alcophobie : 20 secondes.

Exemple 5: Préparation du polymère constitué des motifs suivants :

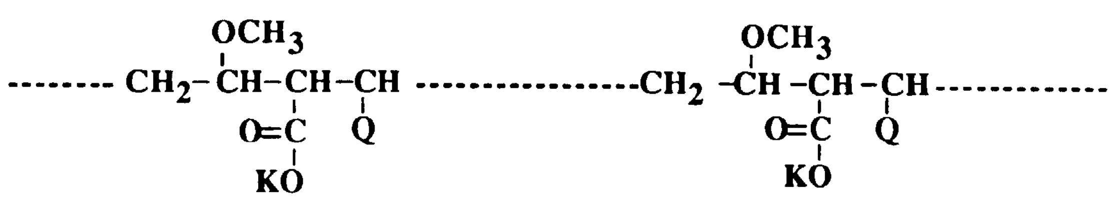

Q =

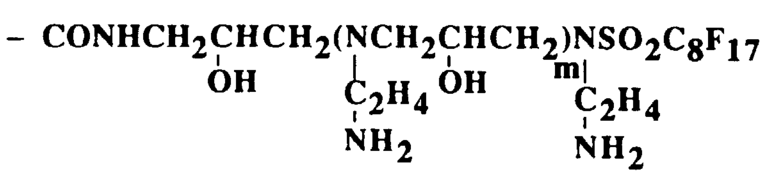

,

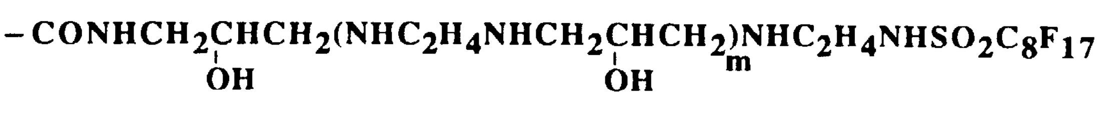

-COOK et $-CONH_2$ , avec m =0-2.

*Intermédiaire (a)*

Dans un réacteur, muni d'un mélangeur et d'un réfrigérant, on introduit 18 g (0,30 mole) d'éthylène diamine et 20 g de diméthylformamide. On ajoute goutte à goutte en mélangeant et en refroidissant 50 g (0,10 mole) de fluorure de

perfluoro octyl sulfonyle. L'addition dure environ 1 heure en maintenant la température du mélange entre 20 et 30°C ; on continue de mélanger encore 3 heures à 30-40°C et on ajoute 84,2 ml d'eau.

Ensuite on verse lentement, tout en mélangeant et en refroidissant 27,8 g (0,30 mole) d'épichlorhydrine du glycerol. Le temps d'addition est d'environ 30 minutes tout en maintenant la température du mélange à 35-40°C. Le mélange est agité encore 3 heures à 35-40°C.

Dans ce mélange on verse 60 g de potasse caustique concentrée (30 g de KOH technique dans 30 ml d'eau) et on élève la température à 80-90°C. Le mélange est agité environ 10 heures à 90°C. On obtient 260 g de mélange.

*Finition:*

On verse dans le mélange précédent 250 g de solution de polyamide, préparée selon l'exemple n°3 (intermédiaire (a)), contenant 0,32 mole d'unité de polymère et on continue à mélanger pendant 15 heures à la température de 90°C. On laisse refroidir et on verse 90 g de butyldiglycol et 600 ml d'eau. On obtient 1200 g de produit contenant environ 10% de matière active, ayant un pH de 8,5 et étant parfaitement soluble dans l'eau.

Tension superficielle à 0,1% : 19 dynes/cm mN/m
Tension superficielle à 0,01% : 35 dynes/cm "
Tension interfaciale à 0,1% : 5,5 dynes/cm "
Valeur de l'alcophobie : 32 secondes.

Exemple 6: Préparation du polymère, constitué des motifs suivants :

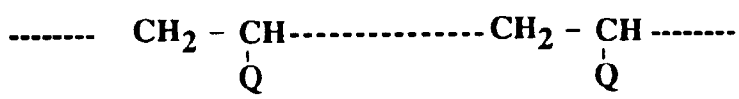

Q =

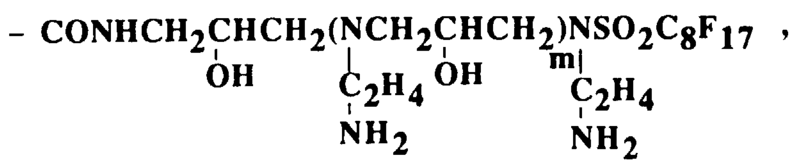

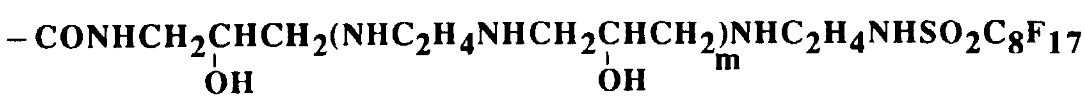

et $-CONH_2$ , avec m = 0-2.

Dans un réacteur on introduit 250 g (0,70 mole d'unité de polymère) de polyacrylamide en solution à 20% et on verse 260 g de solution du produit intermédiaire (a) obtenu dans l'exemple n°5. On mélange pendant 15 heures à la température de 90°C. Ensuite on laisse refroidir et on verse 600 ml d'eau et 90 g de butyldiglycol. Le mélange obtenu pèse 1200 g, contient environ 10% de matière active et est parfaitement soluble dans l'eau. Son pH est 8.

Tension superficielle à 0,1% : 20 dynes/cm mN/m
Tension superficielle à 0,01% : 38 dynes/cm "
Tension interfaciale à 0,1% : 5 dynes/cm "
Valeur de l'alcophobie : 25 secondes.

Exemple 7 : Préparation du polymère, constitué des motifs suivants:

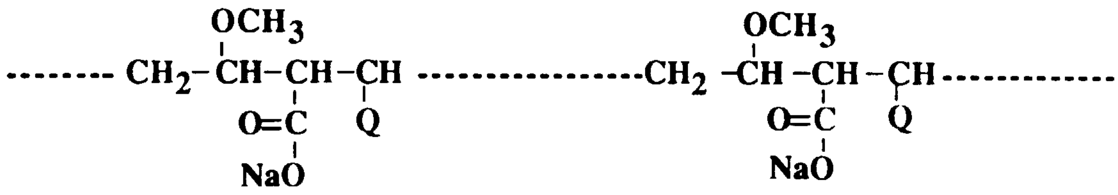

Q =

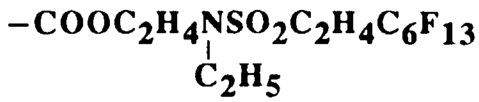 , 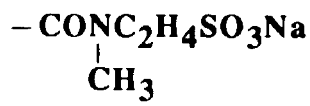 ,

$-CO(OC_2H_4)_2OC_4H_9$ et $-COONa$ .

Dans un ballon muni d'un mélangeur et d'un refrigérant on introduit 2 g de diméthylformamide, 2,47 g (0,028 mole) de N-éthyl-éthanolamine et 3,13 g (0,031 mole) de triéthylamine. On ajoute ensuite goutte à goutte tout en mélangeant, 12,45 g (0,028 mole) de chlorure de perfluorohexyl-éthane sulfonyle dissous dans 10 g de diméthyl formamide, en maintenant la température inférieure à 40°C. Après 1' addition, on mélange encore 1 heure à 40°C et 2 heures à 80°C.

On verse ensuite 52 g de solution visqueuse contenant 22 g (0,141 mole) de copolymère d'éther méthylique de vinyl et d'anhydride maléique et 30 g de diméthyl formamide. On ajoute 9 g (0,056 mole) de butyldiglycol et 0,40 g d'acide sulfurique concentré. On mélange pendant 10 heures à la température de 105°C. On laisse refroidir et on ajoute 44 g (0,174 mole) de N-méthyl taurinate de sodium (62-65%) en mélangeant à 60°C pendant 30 minutes et on dilue le mélange avec 64,55 ml d'eau. On obtient 200 g de solution concentrée, contenant environ 30% de matière active. Son pH est 8.

Tension superficielle à 0,1% : 18 dynes/cm mN/m
Tension superficielle à 0,01% : 37 dynes/cm "
Tension interfaciale à 0,1% : 6 dynes/cm "
Valeur de l'alcophobie : 12 secondes.

Exemple 8 : Préparation du polymère constitué des motifs suivants:

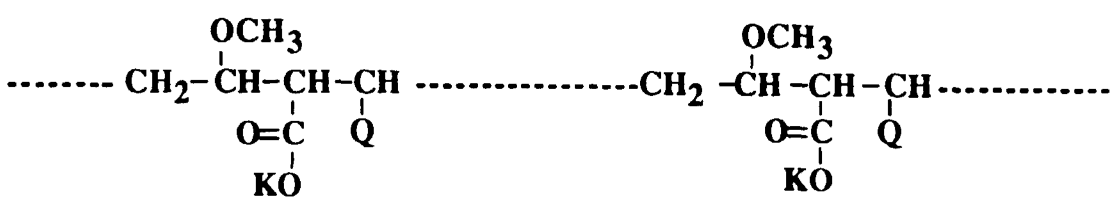

Q =

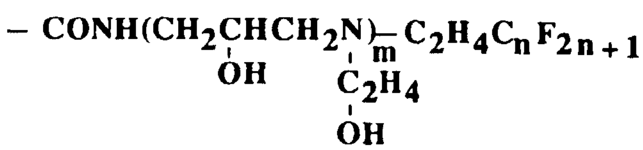 ,

$-COOK$ et $-CONH_2$ avec m = 5-20 et n = 6-16 .

Dans un réacteur muni d'un réfrigérant et d'un agitateur, on fait réagir 28,6 g (0,05 mole) d'un mélange d'iodure de perfluoro alkyl éthyl, chauffé préalablement à 30°C, répondant à la formule $C_nF_{2n+1}C_2H_4I$ et contenant environ :

| | |
|---|---|
| 54% en poids | $C_6F_{13}$ - $C_2H_4I$ |
| 27% | $C_8F_{17}$ - $C_2H_4I$ |
| 11% | $C_{10}F_{21}$ - $C_2H_4I$ |
| 4,5% | $C_{12}F_{25}$ - $C_2H_4I$ |
| 2% | $C_{14}F_{29}$ - $C_2H_4I$ |
| 1% | $C_{16}F_{33}$ - $C_2H_4I$ |

avec 30,50 g (0,50 mole) de monoéthanolamine, dissous dans 20 g de diméthylformamide . La température est maintenue à 90°C en agitant pendant 4 heures.

On laisse ensuite refroidir à 60-70°C et on ajoute en plusieurs portions 46,25 g (0,50 mole) d'épichlorhydrine du glycerol. Après addition on mélange à 70°C pendant 1 heure et à 80°C pendant 10 heures. On refroidit jusqu'à 60°C et on ajoute 37 g (0,60 mole) de potasse caustique technique, dissous dans 40 ml d'eau. On continue à mélanger et à chauffer à 90°C pendant 10 heures environ.

Ensuite on ajoute 125 g de polyamide obtenu selon l'exemple n°3 (intermédiaire (a)), contenant 0,160 mole d'unité de polymère et on mélange en chauffant à 90°C pendant 15 heures.On ajoute 60 g de butyldiglycol et on dilue avec 212,65 ml d'eau pour obtenir 600 g de solution, contenant environ 17% de matière active. Le pH est 8,5.

Tension superficielle à 0,1% : 22 dynes/cm mN/m
Tension superficielle à 0,01% : 40 dynes/cm "
Tension interfaciale à 0,1% : 7 dynes/cm "
Valeur de l'alcophobie : 37 secondes.

Exemple 9 : Préparation de polymère constitué du motif suivant:

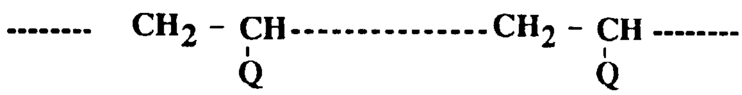

Q =

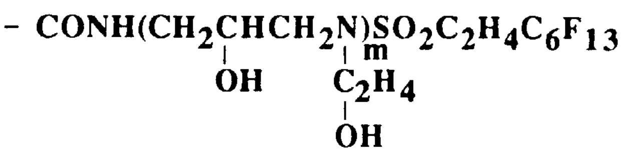

avec m = 2-4 et - $CONH_2$ .

Dans un réacteur muni d'un agitateur et d'un réfrigérant,on pèse 18,30 g (0,30 mole) de monoéthanolamine et on ajoute goutte à goutte 44,4 g (0,10 mole) de chlorure de perfluorohexyl-éthane sulfonyle dissous dans 20 g de diméthyl formamide à la température de 40°C. Après l'addition on mélange encore 1 heure à 40°C et 2 heures à 80°C. On verse ensuite 89,5 ml d'eau et 27,8 g (0,30 mole) d'épichlorhydrine du glycerol en plusieurs portions en maintenant la température à 40-50°C. Après l'addition, on mélange à 70°C pendant 1 heure et encore 10 heures à 80-90°C.

On prépare une solution concentrée de potasse caustique, contenant 30 g de potasse caustique technique (0,46 mole) et 30 ml d'eau. On verse cette solution dans le mélange précédent et on continue à mélanger pendant 10 heures à 90°C. On ajoute ensuite 250 g (0,70 mole d'unité de polymère) de polyacrylamide (20% en solution dans l'eau) et on mélange pendant 15 heures à 80°C ; enfin on laisse refroidir à 30°C et on ajoute 90 g de butyldiglycol ; on dilue alors le mélange avec 600 ml d'eau pour obtenir 1200 g de solution contenant environ 10% de matière active et de pH 8.

Tension superficielle à 0,1% : 21 dynes/cm mN/m
Tension superficielle à 0,01% : 35 dynes/cm "
Tension interfaciale à 0,1 % : 6,5 dynes/cm "
Valeur de l'alcophobie : 18 secondes.

Exemple 10: Préparation du polymère constitué des motifs suivants:

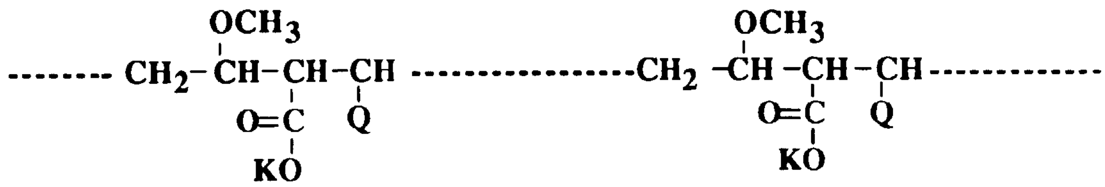

Q =

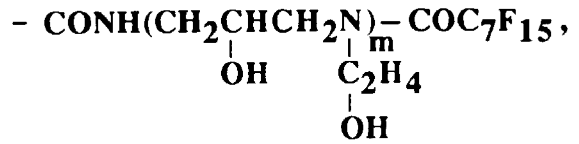

COOK et $CONH_2$ avec m = 4-8

Dans un réacteur muni d'un agitateur et d'un réfrigérant on pèse 18,3 g (0,30 mole) de monoéthanolamine et on ajoute lentement 41,5 g (0,1 mole) de fluorure d'acide perfluorooctanoïque dilué dans 20 g de diméthylformamide, en maintenant la température à 50°C. Après l'addition, on mélange encore 1 heure à 50°C et 3 heures à 80°C. Puis on verse 92,4 ml d'eau et on laisse le mélange refroidir à la température de 50°C. On ajoute alors lentement 27,8 g (0,3 mole) d'épichlorhydrine du glycerol en maintenant la température du mélange à 60-70°C. Puis on chauffe à 80°C pendant 10 heures.

On verse ensuite 60 g de solution contenant 30 g de potasse caustique technique dissous dans 30 ml d'eau et on continue à mélanger à 80-90°C pendant 15 heures.

On obtient environ 260 g de produit qui est traité ensuite selon la finition décrite dans l'exemple n°5. On obtient alors 1200 g de solution contenant environ 10% de matière active. Son pH est d'environ 8,5. Le produit est soluble dans l'eau.

Tension superficielle à 0,10% : 20 dynes/cm mN/m
Tension superficielle à 0,010% : 35 dynes/cm "
Tension interfaciale à 0,10% : 6 dynes/cm "
Valeur de l'alcophobie : 27 secondes.

Exemple 11: Préparation du polymère constitué des motifs suivants:

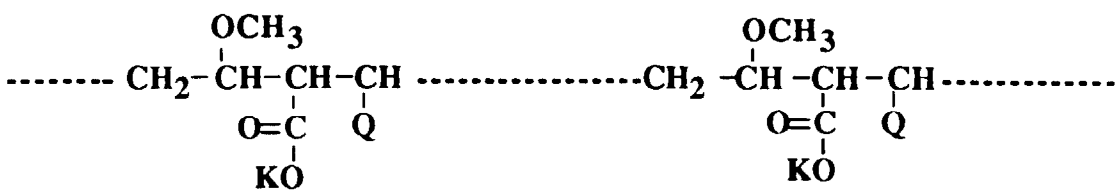

Q =

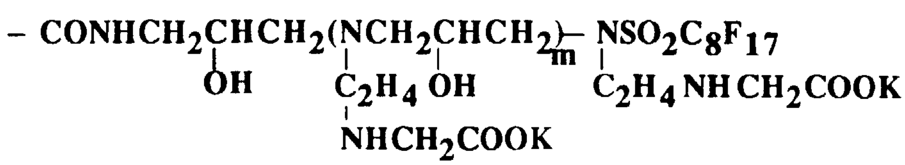

et

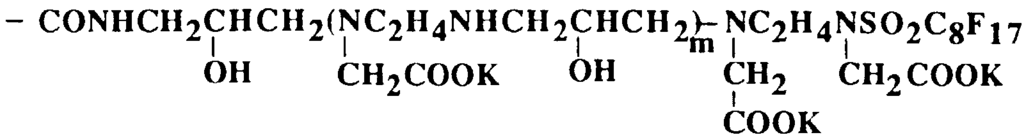

-COOK et -$CONH_2$ avec m = 0-2

Le produit est obtenu comme dans l'exemple n°5, mais avant l'addition de 600 ml d'eau, on ajoute 23,2 g (0,20 mole) de monochloroacétate de sodium dissous dans 300 ml d'eau. Le mélange est chauffé à 70-80°C et est agité pendant 7 heures. On complète le mélange à 1200 g avec de l'eau. Son pH est 7 et sa teneur en matière active est d'environ 10%.

Tension superficielle à 0,1% : 18 dynes/cm mN/m
Tension superficielle à 0,01% : 30 dynes/cm "
Tension interfaciale à 0,1% : 5 dynes/cm "
Valeur de l'alcophobie : 35 secondes

Exemple 12:

Préparation du polymère constitué des motifs suivants:

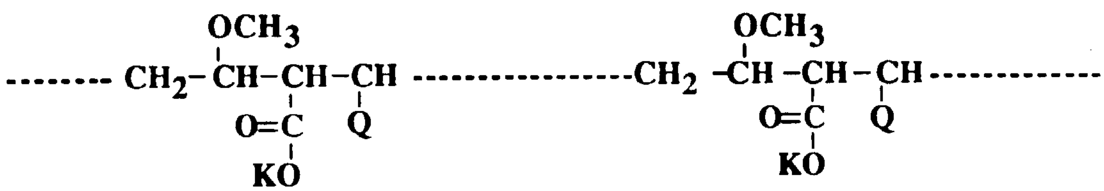

Q =

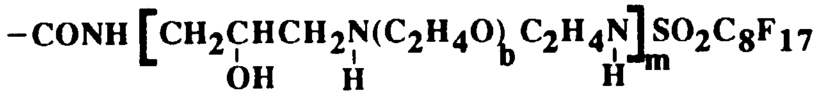 ,

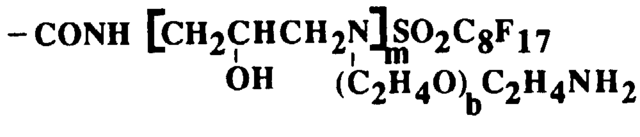 ,

-COOK et -$CONH_2$ avec b = 8 et m = 1 à 2 .

Intermédiaire (a)

Dans un réacteur, muni d'un mélangeur et d'un réfrigérant, on introduit 120 g (0,30 mole) de polyéther diamine 400, dont la formule est la suivante :

$$NH_2\text{-}(C_2H_4O)_b\text{-}C_2H_4\text{-}NH_2$$ ( Poids moléculaire ≈ 400 et b ≈ 8).

On ajoute goutte à goutte en mélangeant et en refroidissant 50 g (0,10 mole) de fluorure de perfluorooctylsulfonyle. L'addition dure environ 90 minutes en maintenant la température du mélange entre 20 et 30°C ; on continue de mélanger encore 3 heures à 30-40°C et on ajoute 102,2 ml d'eau.

Ensuite on verse lentement, tout en mélangeant et en refroidissant 27,8 g (0,30 mole) d'épichlorhydrine du glycerol. Le temps d'addition est d'environ 30 minutes tout en maintenant la température du mélange à 35-40°C. Le mélange est agité encore 3 heures à 35-40°C et on ajoute 240 ml d'eau.

Dans ce mélange on verse 60 g de potasse caustique concentrée (30 g de KOH technique dans 30 ml d'eau) et on élève la température à 80-90°C. Le mélange est agité environ 10 heures à 90°C. On obtient 600 g de mélange.

Finition :

On verse dans le mélange précédent 250 g de solution de polyamide, préparée selon l'exemple n°3 (intermédaire (a)) , contenant 0,32 mole d'unité de polymère. Le mélange est agité pendant 15 heures à la température de 90°C. On laisse refroidir et on verse 90 g de butyldiglycol et 1060 ml d'eau. On obtient 2000 g de produit contenant environ 10% de matière active, ayant un pH de 8,5 et étant parfaitement soluble dans l'eau.

Tension superficielle à 0,1% : 20 dynes/cm mN/m
Tension superficielle à 0,01% : 32 dynes/cm "
Tension interfaciale à 0,1% : 4 dynes/cm "
Valeur de l'alcophobie : 28 secondes

Exemples 13 à 19 :

Préparation des époxydes intermédiaires perfluoroalkylés alcophobes, répondant aux formules générale et dérivée suivantes :

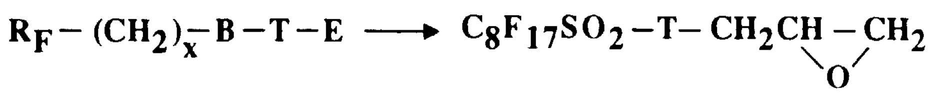

avec

$R_F$ = perfluoroalkyle $C_{4-20}$ ;
E =

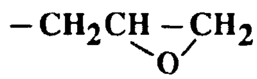

ou un atome d'hydrogène.
B = $-SO_2$ , -CO lorsque x = 0 à 4; ou une liaison simple lorsque x = 1 à 4;
x = un nombre entier de 0 à 4; différent ou égal à q;

T =

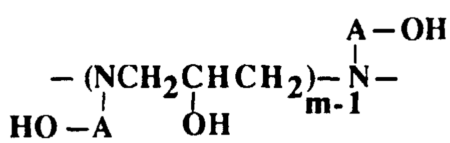

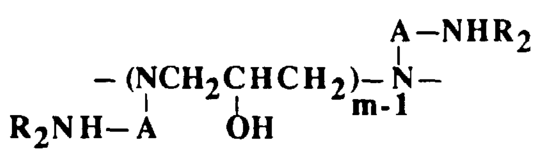

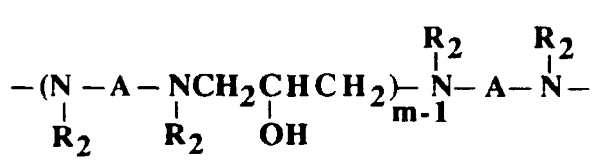

lorsque

E =

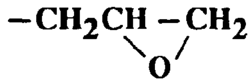

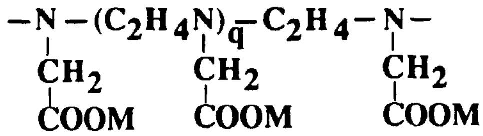

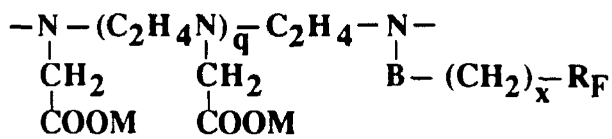

lorsque E = un atome d'hydrogène ;

$R_2$ = $-CH_2COOM$, -H , alkyle $C_{1-4}$ ;

M = -H ou un métal alcalin ou $NH_4^+$ ;

A = alkylène $C_{2-6}$ ou un autre groupement divalent tel que :

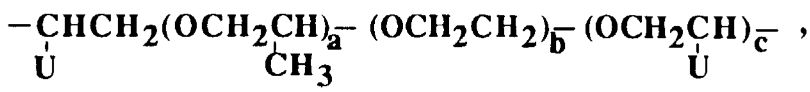

$$-(CH_2CH_2NH)_q-CH_2CH_2-$$

lorsque A est compris entre deux atomes d'azote;

U = -H ou - $CH_3$.

a = un nombre entier de 0 à 60;
b = un nombre entier de 0 à 60,différent ou égal à a et c;
c = un nombre entier de 0 à 60,différent ou égal à a et b;
m = un nombre entier de 1 à 20;
q = un nombre entier de 0 à 4.

Exemples 13, 14 :

Dans un réacteur, muni d'un mélangeur et d'un réfrigérant , on introduit :

- soit 3,66 g (0,06 mole) d'éthanolamine (exemple 13),
- soit 3,60 g (0,06 mole) d'éthylène diamine (exemple 14).

Ensuite on ajoute 4 g de diméthylformamide, puis goutte à goutte en mélangeant et en refroidissant 10 g (0,02 mole) de fluorure de perfluorooctylsulfonyle. L'addition dure environ 90 minutes en maintenant la tempérture du mélange entre 20 et 30 °C ; on continue ensuite de mélanger encore 3 heures à 30-40°C.

On verse d'abord 5 ml d'eau et ensuite, lentement, tout en mélangeant et en refroidissant 5,5 g (0,06 mole) d'épichlorhydrine du glycerol. On mélange après addition environ 30 minutes à 60°C. Ensuite on ajoute 5 ml d'eau et une solution de potasse caustique concentrée (5 g KOH dissous dans 5 ml d'eau). On maintient le mélange à 80° C pendant une nuit.

Dans le cas de l'exemple 13, on ajoute 41,84 ml d'eau et 5g de butyldiglycol pour obtenir 85g de solution concentrée.

Dans le cas de l'exemple 14, on ajoute 7 g (0,06 mole) de monochloracétate de sodium dissous dans 30 ml d'eau

et on mélange à la température de 70-80 °C pendant environ 10 heures. Après avoir refroidi le mélange, on ajoute 2,3 g de potasse caustique dissous dans 12,6 ml d'eau pour régler le pH à 9 environ. Ensuite on verse 5 g de butyldiglycol pour obtenir 100 g de solution concentrée.

Exemples 15, 16, 17, 18, 19,

Dans un réacteur muni d'un mélangeur et d'un réfrigérant, on pèse :

- soit 13,80 g (0,06 mole) de poly(oxypropylène)diamine, répondant à la formule suivante :

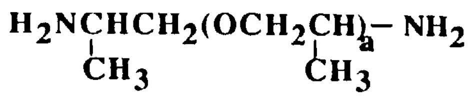

(poids moléculaire ≈ 230 ; a = 2 à 3 valeur moyenne = 2,6) (exemple 15),

- soit 120 g (0,06 mole) de poly(oxyéthylène)diamine, répondant à la formule suivante :

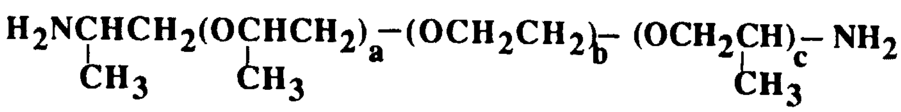

(poids moléculaire ≈ 2000 ; b = 40,5 ; a+c = 2,5) ( exemple 16),

- soit 6,18 g (0,06 mole) de diéthylène triamine (mélange d'isomères) (exemple 17),
- soit 11,45 g (0,06 mole) de tétraéthylène pentamine (mélange d'isomères) (exemple 18),
- soit 13,92 g (0,06 mole) de pentaéthylène hexamine (mélange d'isomères) (exemple 19).

Ensuite on ajoute 4 g de diméthylformamide (excepté dans l'exemple 16, où l'on utilise 40 g de DMF) et 7,35 g (0,06 mole) de monochloracétate d'éthyle en refroidissant et en maintenant la température maximale autour de 60-70°C pendant une heure.

On refroidit à 40°C pour ajouter 10 g de triéthylamine et on verse lentement 10 g (0,02 mole) de fluorure de perfluorooctylsulfonyle en maintenant la température à 70°C pendant 2 heures et à 85°C pendant deux heures encore.

On ajoute ensuite 20 ml d'eau. On refroidit à 50°C et on verse lentement, tout en mélangeant et en refroidissant 5,5 g (0,06 mole) d'épichlorhydrine du glycérol. On mélange après addition encore une demi-heure à 70°C.

Ensuite on verse 5 ml d'eau et une solution concentrée de potasse caustique (5 g de KOH dissous dans 5 ml d'eau). On mélange à la température de 80°C pendant une nuit.

On refroidit à 30°C et on ajoute 4 g de butyldiglycol et le mélange est complété à 100 g par de l'eau (excepté dans l'exemple 16 où le mélange est complété à 270 g par de l'eau) pour obtenir une solution concentrée.

Le tableau suivant rassemble les valeurs des tensions superficielle et interfaciale , ainsi que celle de l'alcophobie des solutions aqueuses des produits obtenus dans les exemples 13 à 19 :

| Exemple | 13 | 14 | 15 | 16 | 17 | 18 | 19 |
|---|---|---|---|---|---|---|---|
| Produit obtenu / g | 85 | 100 | 100 | 270 | 100 | 100 | 100 |
| Matière active / % | 19 | 22 | 29 | 51 | 23 | 28 | 30 |
| Tension superficielle d'une solution à 0,1 % (dyne/cm) mN/m | 17,0 | 18,7 | 22,4 | 22,4 | 21,6 | 22,0 | 25,5 |
| à 0,01% (dyne/cm) mN/m | 17,3 | 31,1 | 24,1 | 40,1 | 26,4 | 23,4 | 29,3 |
| Tension interfaciale d'une solution à 0,1 % (dynes/cm) mN/m | 5,3 | 3,8 | 4,3 | 7,2 | 4,2 | 3,8 | 5,1 |
| Valeur de l'alcophobie d'une solution à 5% ( secondes) | 45 | 50 | 30 | 5 | 25 | 30 | 28 |

Exemples 20, 21, 22

Préparation du polymère constitué des motifs suivants :

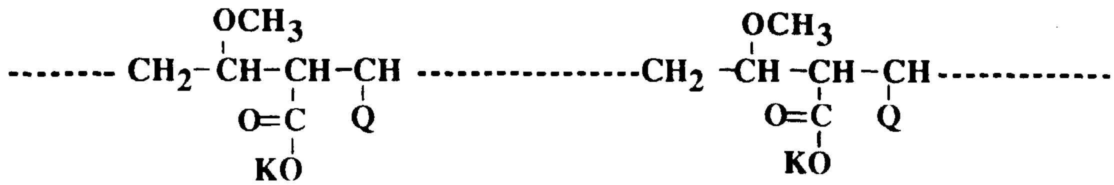

Q =

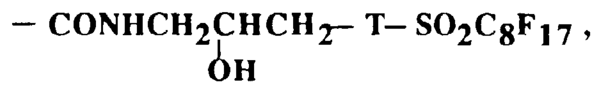

$-CONH_2$ et $-COOK$;

T est défini dans les exemples 13 à 19.

Dans un réacteur on introduit 25 g de polyamide obtenu dans l'exemple 3 (a) et on ajoute 50 g de produit préparé selon l'exemple 16 ou 17 ou 18. Puis on mélange et on chauffe à 90°C pendant 15 heures. On ajoute ensuite 40 ml d'eau et 5 g de butyldiglycol. On obtient 120 g d'une solution concentrée de consistance épaisse, parfaitement soluble dans l'eau ; son pH est environ 9. Dans le tableau suivant sont représentées les valeurs des tensions superficielle et interfaciale, ainsi que celle de l'alcophobie d'une solution aqueuse des produits obtenus dans les exemples 20, 21, 22.

| Exemple | 20 | 21 | 22 |
|---|---|---|---|
| Produit obtenu / g | 120 | 120 | 120 |
| Matière active / % | 16 | 13 | 15 |
| Tension superficielle d'une solution à 0,1% (dyne / cm) mN/m | 24 | 22,6 | 26 |
| à 0,01% (dyne/cm) mN/m | 35 | 38 | 36 |
| Tension interfaciale d'une solution à 0,1% (dynes/cm) mN/m | 5,6 | 4,5 | 4,8 |
| Valeur de l'alcophobie d'une solution à 5% ( secondes ) | 30 | 40 | 38 |

Exemple 23

Préparation d'un intermédiaire perfluoroalkylé alcophobe possédant un hydrogène mobile répondant aux formules générale et dérivée suivantes :

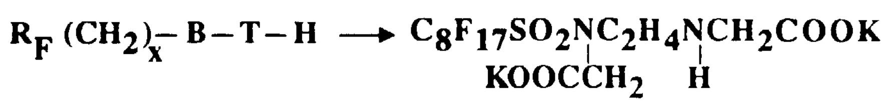

$R_F$, B, T et x sont définis dans les exemples 13 à 19.

Dans un réacteur muni d'un mélangeur et d'un réfrigérant on introduit 1,2 g (0.02 mole) d'éthylène diamine et 6 g de diméthylformamide.

Ensuite on ajoute goutte à goutte et en refroidissant 10 g (0,02 mole) de fluorure de perfluorooctylsulfonyle. On maintient une température maximale de 30°C pendant l'addition et on mélange encore deux heures à 30-40°C. On ajoute 4,7 g (0,04 mole) de monochloroacétate de sodium dissous dans 10 ml d'eau, en maintenant la température du mélange vers 40-50 °C pendant une heure. On verse ensuite 20 ml d'une solution de potasse caustique contenant 3,4 g de KOH dans 5 ml d'eau et on mélange à la température de 60-70°C pendant 4 heures. On refroidit et on ajoute 5 g de butyldiglycol et on complète le mélange à 100 g par addition d'eau pour obtenir une solution concentrée ayant un pH d'environ 8-9.

Dans le tableau suivant sont représentées les valeurs des tensions superficielle et interfaciale, ainsi que celle de l'alcophobie d'une solution aqueuse du produit obtenu dans l'exemple 23.

| Exemple | 23 |
|---|---|
| produit obtenu / g | 100 |
| matière active / % | 14 |
| Tension superficielle d'une solution à 0,1% (dynes/cm) mN/m | 18 |
| 0,01% (dynes/cm) " | 25 |
| Tension interfaciale d'une solution à 0,1% (dynes/cm) " | 6 |
| Valeur de l'alcophobie d'une solution à 5% ( secondes) | 20 |

Exemples 24, 25

Préparation des intermédiaires perfluoroalkylée alcophobes possédant un hydrogène mobile, répondant aux formules générale et dérivée suivantes :

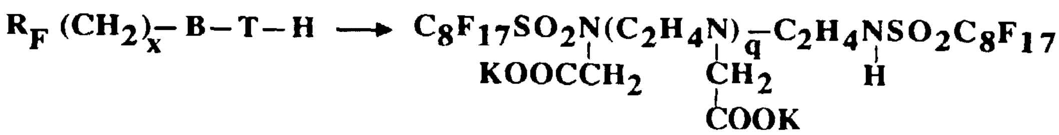

q = 1 dans le cas de l'exemple 24
q = 3 dans le cas de l'exemple 25

$R_F$, B, T et x sont définis dans les exemples 13 à 19.

Dans un réacteur muni d'un mélangeur et d'un réfrigérant, on introduit - soit 1,03 g (0,01 mole) de diéthylènetriamine (mélange d'isomères) (exemple 24), - soit 1,89 g (0,01 mole) de tetraéthylènepentamine (mélange d'isomères) (exemple 25) et 4 g de diméthylformamide.

Ensuite on verse en refroidissant et en mélangeant énergiquement 10 g (0,02 mole) de fluorure de perfluorooctylsulfonyle. On mélange à 50°C pendant une demi-heure et encore deux heures à 80°C. On ajoute ensuite 5 ml d'eau en refroidissant à 50°C et on verse une solution contenant 2,33 g (0,02 mole) dans le cas de l'exemple 24 ou 4,66 g (0,04 mole) dans le cas de l'exemple 25 de monochloracétate de sodium dissous respectivement dans 10 ml ou 20 ml d'eau. La température du mélange est maintenue à 70-80°C pendant 5 heures. Ensuite, on refroidit le mélange à 30°C et on ajoute 4 g de butyldiglycol puis 5,6 g (exemple 24) ou 7,9 g (exemple 25) de potasse caustique à 50% de concentration, et de l'eau en quantité nécessaire pour obtenir 100 g de solution concentrée avec un pH d'environ 8.

Le tableau suivant rassemble les valeurs des tensions superficielle et interfaciale , ainsi que celle de l'alcophobie des solutions aqueuses des produits obtenus dans les exemples 24 et 25 :

| Exemple | 24 | 25 |
|---|---|---|
| Produit obtenu / g | 100 | 100 |
| Matière active / % | 12,5 | 15 |
| Tension superficielle d'une solution à 0,1% (dynes/cm) mN/m | 17,5 | 16,5 |
| 0,01% (dynes/cm) " | 19 | 18,5 |
| Tension interfaciale d'une solution à 0,1% : (dynes/cm) " | 4,5 | 4,8 |
| Valeur de l'alcophobie d'une solution à 5% ( secondes) | 40 | 50 |

Exemples 26, 27, 28

Préparation du polymère, constitué des motifs suivants :

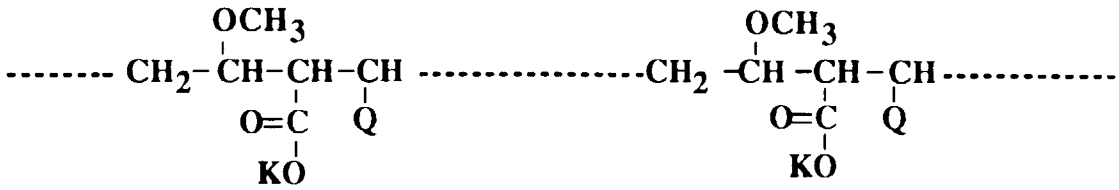

Q =

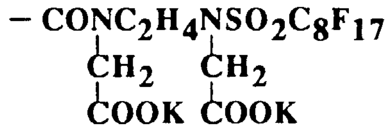

dans le cas de l'exemple 26;

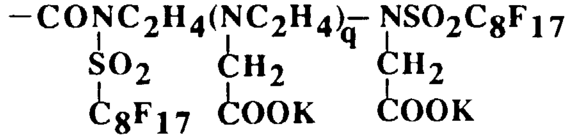

dans le cas des exemples 27 et 28;

avec q = 1 dans le cas de l'exemple 27
et q = 3 dans le cas de l'exemple 28.

-COOK .

Dans un ballon muni d'un agitateur et d'un réfrigérant, on verse 77,4 ml d'eau, dans laquelle on disperse 15,6 g (0,1 mole d'unité du polymère) de copolymère d'éther méthylique de vinyle et d'anhydride maléique, à la température ambiante (poids moléculaire ≈ 25000). Ensuite on ajoute 100 g de produit (préalablement vérifié et ajusté à pH 9 par addition de potasse caustique concentrée si nécessaire) obtenu

- soit selon l'exemple 23 (dans le cas de l'exemple 26),
- soit selon l'exemple 24 (dans le cas de l'exemple 27),
- soit selon l'exemple 25 (dans le cas de l'exemple 28).

On mélange et on chauffe à 80°C pendant 10 heures. On laisse refroidir à 30°C, on ajoute ensuite 17 g de solution de potasse caustique à 50% et on complète avec de l'eau pour obtenir environ 200g de produit concentré sous forme de pâte à pH 8 environ.

Le tableau suivant rassemble les valeurs de tension supeficielle et interfaciale, ainsi que celle de l'alcophobie des solutions aqueuses des produits obtenus dans les exemples 26 à 28 :

| Exemple | 26 | 27 | 28 |
|---|---|---|---|
| Produit obtenu / g | 200 | 200 | 200 |
| Matière active 1% | 14 | 14 | 15 |
| Tension superficielle d'une solution à 0,1% : (dynes/cm) mN/m | 19 | 20 | 18,5 |
| 0,01% (dynes/cm) mN/m | 21 | 23 | 22 |
| Tension interfaciale d'une solution à 0,1% (dynes/cm) mN/m | 5 | 4,5 | 5,5 |
| Valeur de l'alcophobie d'une solution à 5% ( secondes ) | 30 | 50 | 60 |

Exemples 29, 30 :

Préparation des intermédiaires perfluoroalkylés alcophobes possédant un hydrogène mobile, répondant aux formules générale et dérivée suivantes :

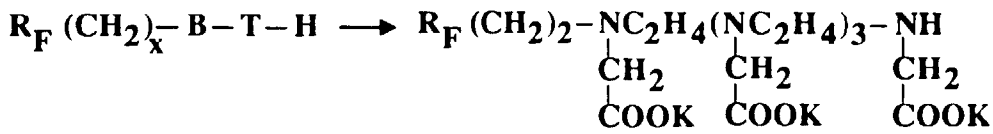

| | |
|---|---|
| B, T et x | sont définis dans les exemples 13 à 19; |
| $R_F$ = | $-C_6F_{13}$ dans le cas de l'exemple 29; |
| | $-C_8F_{17}$ dans le cas de l'exemple 30. |

Dans un ballon muni d'un réfrigérant et d'un agitateur on dispose 11,45 g (0,06 mole) de tétraéthylènepentamine (mélange d'isomères) et on ajoute

- soit 9,2 g (0,02 mole) de iodure de perfluorohexyléthyle (exemple 29),
- soit 11,2 g (0,02 mole) de iodure de perfluorooctyléthyle (exemple 30);

on chauffe alors à 30°C puis en mélangeant on ajoute 5 g de diméthylformamide et on maintient le mélange à 90°C pendant 5 heures.

On refroidit le mélange à 50°C puis on ajoute 39,6 g (0,34 mole) de monochloroacétate de sodium dissous dans 70 ml d'eau et on mélange pendant 5 heures à 70 °C. Ensuite on verse une solution de potasse caustique contenant 17 g de KOH et 20ml d'eau. On maintient la température à 70°C encore deux heures, on ajoute 6 g de butyldiglycol et on complète avec de l'eau pour obtenir 200 g de produit concentré.

Le tableau suivant rassemble les valeurs des tension superficielle et interfaciale, ainsi que celle de l'alcophobie des solutions aqueuses des produits obtenus dans les exemples 29 et 30 :

| Exemple | 29 | 30 |
|---|---|---|
| Produit obtenu / g | 200 | 200 |
| Matière active / % | | |
| Tension superficielle d'une solution à 0,1% : (dynes/cm) mN/m | 23 | 22 |
| 0,01% (dynes/cm) " | 34 | 32 |
| Tension interfaciale d'une solution à 0,1% : (dynes/cm) " | 5 | 5,5 |
| Valeur de l'alcophobie d'une solution à 5% ( secondes) | 15 | 20 |

Exemple 31:

Préparation d'un intermédiaire perfluoroalkylé alcophobe possédant un hydrogène mobile répondant aux formules générale et dérivée suivantes :

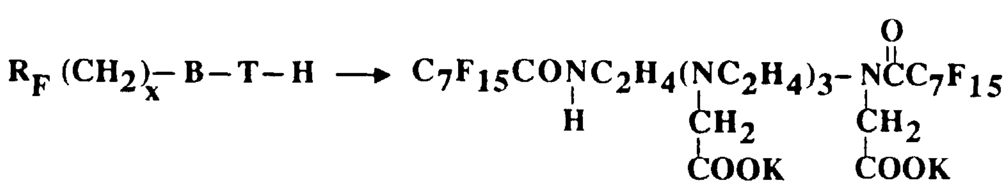

$R_F$, B, T et x sont définis dans les exemples 13 à 19.

Dans un réacteur on pèse 1,89 g (0,01 mole) de tétraéthylènepentamine (mélange d'isomères) et 5g de diméthylformamide ; on ajoute ensuite en plusieurs portions 8,65 g (0,02 mole) de chlorure de perfluorooctanoyle. On maintient le mélange à la température de 50°C pendant une demi-heure et 80°C pendant 3 heures. On refroidit le

mélange à 50°C et on joute 4,7 g (0,04 mole) de monochloracétate de sodium dissous dans 10 ml d'eau . Ensuite on mélange à la température de 70°C pendant 7 heures.On verse 30 ml d'eau et on refroidit le mélange à 30°C. Puis on ajoute 2,3 g de potasse caustique dissous dans 5 g d'eau et 4 g de butyldiglycol.Le mélange est complété à 80 g par de l'eau.

Le tableau suivant rassemble les valeurs des tensions superficielle et interfaciale, ainsi que celle de l'alcophobie d'une solution aqueuse du produit obtenu dans l'exemple 31.

| Exemple | 31 |
|---|---|
| produit obtenu / g | 80 |
| matière active /% | 17 |
| Tension superficielle d'une solution à 0,1% (dynes/cm) mN/m | 18 |
| 0,01% (dynes/cm) " | 25 |
| Tension interfaciale d'une solution à 0,1% (dynes/cm)" | 5 |
| Valeur de l'alcopobie d'une solution à 5% ( secondes) | 45 |

Exemples 32, 33 :

Préparation des polymères constitués des motifs suivants :

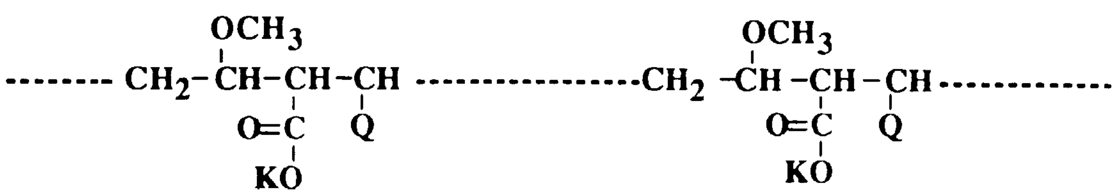

Q =

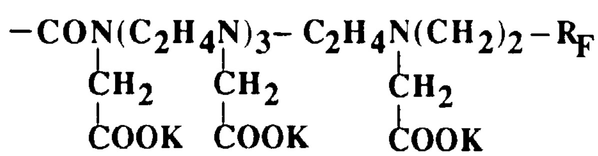

et -COOK;

$R_F$ = $-C_6F_{13}$ dans l'exemple 32;

$-C_8F_{17}$ dans l'exemple 33;

Dans un ballon muni d'un agitateur et d'un réfrigérant, on pèse 200 g de produit obtenu:

- soit selon l'exemple 29,
- soit selon l'exemple 30.

On vérifie et on ajuste le pH à 9 par addition de potasse caustique concentrée si nécessaire. Ensuite on incorpore 15,6 g de copolymère d'éther méthylique de vinyle et d'anhydride maléique à l'aide d'une bonne agitation. Après dispersion, on chauffe le mélange à 80°C pendant 10 heures.On laisse refroidir le mélange à 30°C et on ajoute une solution concentrée de potasse caustique et on complète avec de l'eau pour obtenir 235 g d'un produit fini à pH environ 8 de consistance pâteuse.

Le tableau ci-dessous rassemble les valeurs des tensions superficielle et inter-faciale , ainsi que celle de l'alcophobie des solutions aqueuses des produits obtenus dans les exemples n°32 et 33 :

| Exemple | 32 | 33 |
|---|---|---|
| Produit obtenu / g | 235 | 235 |
| Matière active / % | 15 | 16 |

(suite)

| Exemple | 32 | 33 |
|---|---|---|
| Tension superficielle d'une solution à 0,1% (dynes/cm) mN/m | 24 | 23 |
| 0,01% (dynes/cm) " | 36 | 35 |
| Tension interfaciale d'une solution à 0,1% (dynes/cm) " | 4,5 | 5 |
| Valeur de l'alcophobie d'une solution à 5% ( secondes ) | 35 | 40 |

Exemple 34:

Préparation du polymère constitué des motifs suivants :

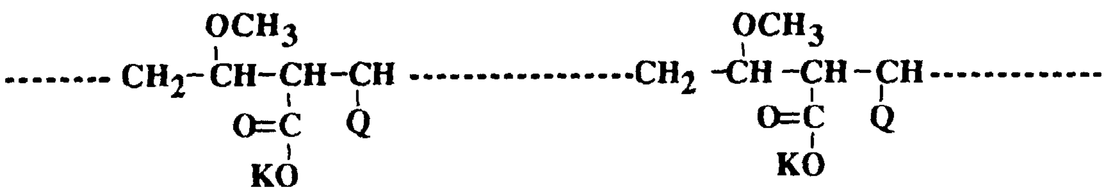

Q =

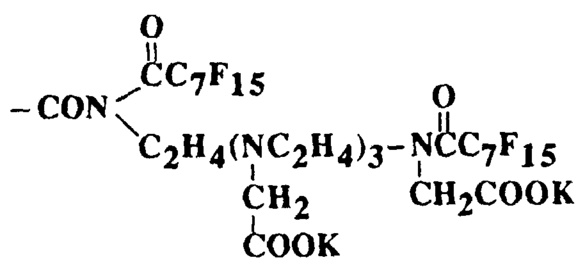

et -COOK

Dans un ballon muni d'un réfrigérant et d'un agitateur, on verse 80 ml d'eau, dans laquelle on disperse 15,6 g (0,1 mole par unité du polymère) de copolymère d'éther méthylique de vinyle et d'anhydride maléique, à température ambiante. Ensuite, on ajoute 80 g de produit obtenu selon l'exemple 31, qu'on a préalablement vérifié et réglé à pH 9 par addition de potasse caustique concentrée si nécessaire. On mélange les deux composants en chauffant à 80°C pendant 10 heures. On laisse refroidir le mélange à 30°C et on ajoute une solution de potasse caustique à 40% et on complète avec de l'eau pour obtenir 200 g de produit concentré à pH environ 8 de consistance pâteuse.

Le tableau suivant rassemble les valeurs des tensions superficielle et interfaciale , ainsi que celle de l'alcophobie d'une solution aqueuse du produit obtenu dans l'exemple 34 :

| Exemple | 34 |
|---|---|
| produit obtenu / g | 200 |
| matière active / % | 14 |
| Tension superficielle d'une solution à 0,1% (dynes/cm) mN/m | 22 |
| 0,01% (dynes/cm) " | 30 |
| Tension interfaciale d'une solution à 0,1% (dynes/cm) " | 5,5 |
| Valeur de l'alcophobie d'une solution à 5% ( secondes) | 55 |

Exemple 35:

Dans cet exemple est défini le mode opératoire utilisé pour mesurer la valeur de l'alcophobie c'est à dire la résistance contre la force destructrice des liquides polaires, en l'occurence l'éthanol.

(a) On prépare des solutions comprenant 95 parties en poids d'eau et 5 parties en poids de produit à tester.

(b) Dans un récipient cylindrique en acier inoxydable de diamètre 70 mm, de hauteur 32,5 mm et de capacité 125 ml, on verse 100 ml d'éthanol à 95%, à la température de 20-22°C du liquide et de l'air ambiant. On couvre 90% de la surface de l'éthanol avec 25 ml de mousse produite à l'aide de la solution (a) par un moyen bien déterminé. A compter du moment où la mousse est versée à la surface, on note le temps nécessaire pour détruire la moitié de la mousse versée initialement Le temps compté en secondes représente la "valeur relative de l'alcophobie".

Les tensioactifs fluorés connus jusqu'ici ne résistent qu' 1 à 2 secondes au contact des liquides polaires; leur disparition à la surface de l'alcool est pratiquement instantanée.

Les produits résistant plus de 10 secondes sont utilisables dans les compositions d'émulseur polyvalent, i.e. ils sont capables de renforcer la résistance de la mousse extinctrice contre les feux destructeurs des liquides polaires.

Le tableau suivant rassemble les résultats des essais d'alcophobie réalisés avec les produits obtenus dans les exemples 1 à 34 et comparés avec la valeur relative d'alcophobie d'un tensioactif fluoré commercial :

| Solution 5% préparée avec les produits des exemples : | Matière active % | Valeurs relatives de l'alcophobie (secondes) | Solution 5% préparée avec les produits des exemples : | Matière active % | Valeurs relatives de l'alcophobie (secondes) |
|---|---|---|---|---|---|
| 1 | 1,25 | 10 | un tensioactif fluoré commercial | 1,35 | <2 |
| 2 | 2,00 | 15 | 18 | 0,75 | 30 |
| 3 | 0,50 | 30 | 19 | 0,80 | 28 |
| 4 | 0,50 | 20 | 20 | 0,80 | 30 |
| 5 | 0,50 | 32 | 21 | 0,65 | 40 |
| 6 | 0,50 | 25 | 22 | 0,75 | 38 |
| 7 | 1,50 | 12 | 23 | 0,70 | 20 |
| 8 | 0,85 | 37 | 24 | 0,62 | 40 |
| 9 | 0,50 | 18 | 25 | 0,75 | 50 |
| 10 | 0,50 | 27 | 26 | 0,70 | 30 |
| 11 | 0,50 | 35 | 27 | 0,70 | 50 |
| 12 | 0,50 | 28 | 28 | 0,75 | 60 |
| 13 | 0,95 | 45 | 29 | 0,50 | 15 |
| 14 | 1,10 | 50 | 30 | 0,55 | 20 |
| 15 | 1,45 | 30 | 31 | 0,85 | 45 |
| 16 | 2,55 | 5 | 32 | 0,75 | 35 |
| 17 | 0,70 | 25 | 33 | 0,80 | 40 |
| | | | 34 | 0,70 | 55 |

**Revendications**

1. Nouveaux tensioactifs polyperfluoroalkylés hydrosolubles, dérivés de polymères fonctionnels polycarboxyliques, caractérisés par le fait qu'ils sont dotés non seulement de propriété oléophobe, mais principalement de propriété alcophobe prononcée, qu'ils sont compatibles avec des agents tensioactifs anioniques et des dérivés protéiniques, que leur structure moléculaire est exempte d'atome d'azote quaternaire organique et munie au moins de deux groupements perfluoroalkylés ayant un nombre d'atome de carbone allant de 4 à 20 qui sont liés indirectement aux fonctions carboxyliques appartenant au polymère par liaison ester ou amide (dans le cas d'un lien par amidification, l'atome d'azote doit porter un groupement hydrophile pour favoriser l'alcophobie), et qu'ils répondent à la formule générale suivante :

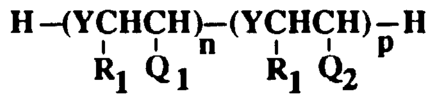

Y =

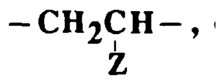

ou une liaison simple;

$Q_1$=

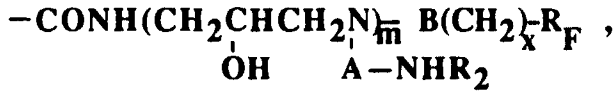

ou

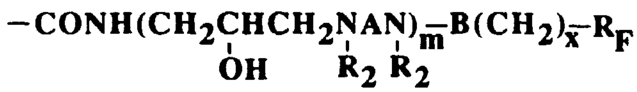

dans tous les cas;

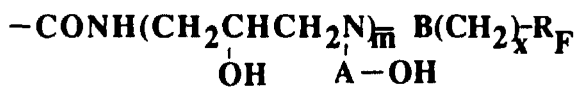

lorsque A = alkylène;

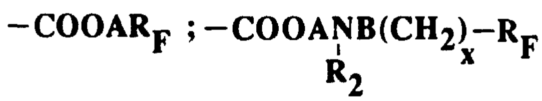

lorsque

Y =

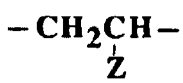

et A = alkylène;

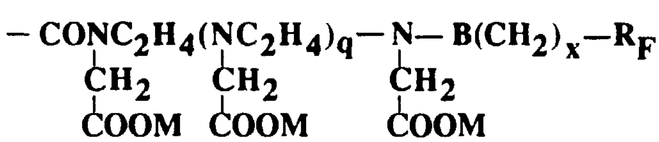

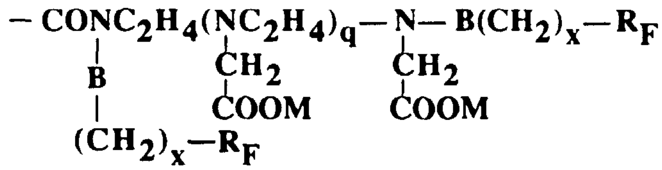

lorsque

Y = 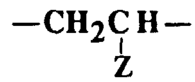

$Q_2$ = $-CONH_2$ dans tous les cas et -COOM, $-COOWOR_3$ ,

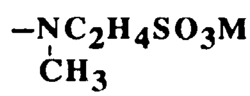

lorsque

Y = 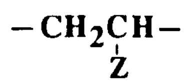

$R_F$ = perfluoroalkyle $C_{4-20}$ ;

$R_1$ = -COOM lorsque

Y = 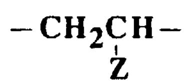

et -H lorsque Y est une liaison simple;

A = alkylène $C_{2-6}$ ou un autre groupement divalent tel que :

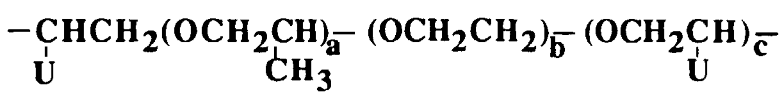 ,

$$-(CH_2CH_2NH)_q-CH_2CH_2-$$

lorsque A est compris entre deux atomes d'azote;

$R_2$ = $-CH_2COOM$, -H , alkyle $C_{1-4}$ ;

$R_3$ = phenyle,alkylphenyle,alkyle;

a = un nombre entier de 0 à 60;

b = un nombre entier de 0 à 60,différent ou égal à a et c;

c = un nombre entier de 0 à 60,différent ou égal à a et b;

n = un nombre entier supérieur à 10;

m = un nombre entier de 1 à 20;

l = un nombre entier de 1 à 20,différent ou égal à m;

p = un nombre entier différent ou égal à n et supérieur à 10;

q = un nombre entier de 0 à 4;

x = un nombre entier de 0 à 4; différent ou égal à q;

B = $-SO_2$, -CO lorsque x = 0 à 4;ou une liaison simple lorsque x = 1 à 4;
W = $-(CH_2CH_2O)_l-CH_2CH_2-$
Z = phenyle, $-OCH_3$, -H, $-CH_3$, $-C_2H_5$, $-CONH_2$, $-COOCH_3$, $-CH_2OOCCH_3$, -N- pyrrolidone;
U = -H ou $-CH_3$.
M = - H ou un métal alcalin ou $NH_4^+$.

**2.** Nouveaux tensioactifs perfluoroalkylés, selon la revendication (1) où le dérivé de polymère polycarboxylé est un dérivé de copolymère éthylénique et d'anhydride maléique.

**3.** Nouveaux tensioactifs perfluoroalkylés, selon la revendication (1) où le dérivé du polymère polycarboxylé est un dérivé polyacrylique.

**4.** Méthode d'obtention de nouveaux tensioactifs perfluoroalkylés selon la revendication (2) caractérisée en ce qu'on ouvre l'anhydride du polymère polycarboxylé par un oligomère perfluoroalkylé , ne contenant pas d'atome d'azote quaternaire organique et portant une fonction à hydrogène mobile.

**5.** Méthode d'obtention de nouveaux tensioactifs perfluoroalkylés selon la revendication (4), dans laquelle le composé perfluoroalkylé est un perfluoroalkyl éthanol, ou un alcanolamine perfluoroalkylé N- substitué.

**6.** Méthode d'obtention de nouveaux tensioactifs perfluoroalkylés selon les revendications (1), (2) et (3), caractérisés par le fait qu'un oligomère perfluoroalkylé alcophobe, portant une fonction époxyde réagit sur un amide, dérivé d'un polymère polycarboxylique.

**7.** Méthode d'obtention de nouveaux tensioactifs perfluoroalkylés selon les revendications (4) et (6), dans laquelle les intermédiaires réactionnels correspondent aux oligomères perfluoroalkylés alcophobes et hydrosolubles, démunis d'atome d'azote quaternaire, notamment les dérivés de polyalcanolamine perfluoroalkylée, d'aminoacide perfluoroalkylé et de polyaminoacide perfluoroalkylé, répondant à la formule générale suivante :

$$R_F-(CH_2)_x-B-T-E$$

E =

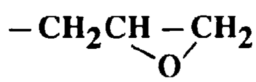

ou un atome d'hydrogène.

T =

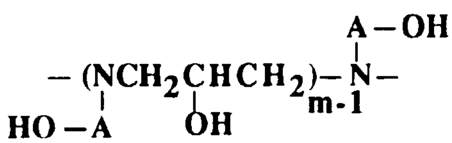

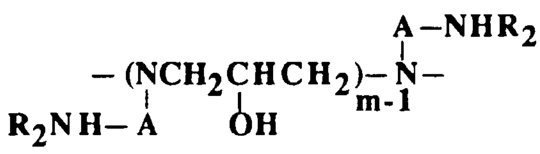

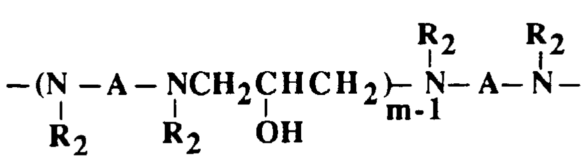

lorsque

E =

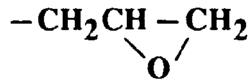

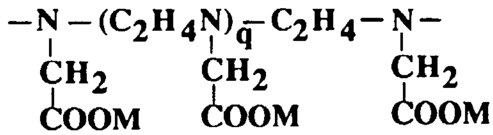

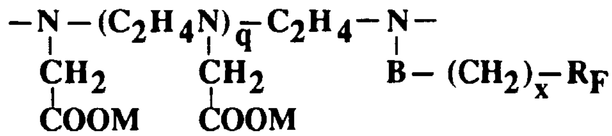

lorsque E = un atome d'hydrogène ;

avec $R_F$, A, B, m, x, q, $R_2$ et M définis dans la revendication (1).

**8.** Application de nouveaux tensioactifs perfluoroalkylés, selon les revendications (1), (2) et (3), caractérisés par le fait qu'on les utilise comme agent alcophobe et oléophobe dans la technique et principalement dans les compositions de mousses extinctrices capables d'éteindre non seulement les feux d'hydrocarbures mais aussi les feux de liquides polaires (alcools, éthers, esters etc...).

## Patentansprüche

**1.** Neue wasserlösliche polyperfluoralkylisierte Tenside als Derivate von funktionellen polycarboxylatischen Polymeren entstanden, dadurch gekennzeichnet, dass sie nicht nur oleophobe sondern auch - und hauptsächlich - ausgeprägte alkophobe Eigenschaften aufweisen, dass sie mit anionischen Tensiden sowie Proteinderivaten kompatibel sind, dass ihre Molekülstruktur von quaternären organischen Stickstoffatomen frei ist und mindestens zwei perfluoralkylisierte Gruppen enthält mit einer Kohlenstoffatomzahl von 4 bis 20, und die indirekt über die Bindung Esther oder Amine mit den carboxylatischen Funktionen des Polymers verbunden sind, (im Falle einer Bindung durch Amidifizierung, muss das Stickstoffatom, um die Alkophobie zu fördern eine hydrophile Gruppe enthalten) dass sie der untenstehenden Formel gemäss sind :

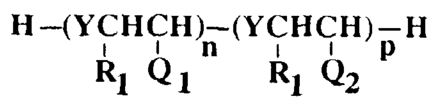

Y =

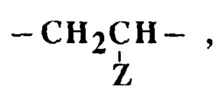

oder eine einfache Bindung

$Q_1$ =

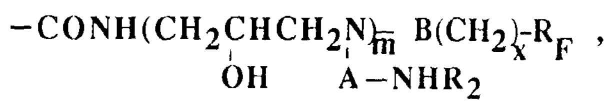

oder

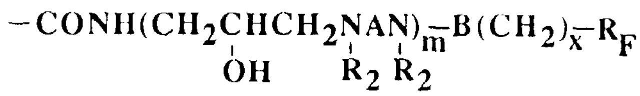

in allen Fällen

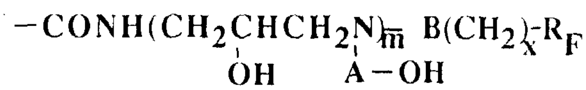

falls A=Alkylen $-COOAR_F$ ;

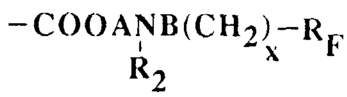

falls

Y =

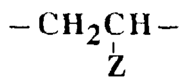

und A=Alkylen ;

B = $-SO_2$ , -CO falls x = 0 bis 4; eine einfache Bindung falls x = 1 bis 4

W = $-(CH_2CH_2O)_l-CH_2CH_2-$

Z = phenyl, $OCH_3$, - H, $-CH_3$, $-C_2H_5$, $-CONH_2$, $-COOCH_3$ $-COOCH_3$, $-CH_2OOCCH_3$, -N-pyrrolidone;

U = -H oder - $CH_3$

M = - H oder ein Alkalimetall oder $NH_4^+$

**2.** Gemäss Anspruch (1) besteht bei den neuen perfluoralkylisierten Tensiden das Derivat des polycarboxylatischen Polymers aus einem Äthylen und Maleinanhydridcopolymer.

**3.** Gemäss Anspruch (1) ist bei den perfluoralkylisierten Tensiden das Derivat des Polymers ein Polyacrylderivat.

**4.** Gemäss Anspruch (2) ist das Verfahren für die Erzeugung von neuen perfluoralkylisierten Tensiden dadurch gekennzeichnet, dass das Anhydrid des polycarboxylatischen Polymers mittels eines perfluoralkylisierten Oligomers geöffnet wird, das keine quaternäre organische Stickstoffatome enthält, und dessen Funktion die eines mobilen Wasserstoffes ist.

**5.** Gemäss Anspruch (4) ist das Verfahren für die Erzeugung von neuen perfluoralkylisierten Tensiden dadurch gekennzeichnet, dass die perfluoralkylisierte Verbindung ein Äthanol-perfluoroalkyl oder ein substituiertes N-perfluoralkylisiertes Alcanolamin ist.

**6.** Gemäss den Ansprüchen (1), (2) und (3) ist das Verfahren für die Erzeugung von neuen perfluoralkylisierte Tensiden dadurch gekennzeichnet, dass ein perfluoralkylisierte alkophobes Oligomer mit Epoxidfunktion auf ein Amid reagiert, das ein Derivat eines polycarboxylatisches Polymers ist.

**7.** Gemäss den Ansprüchen (4) und (6), ist das Verfahren für die Erzeugung von neuen perfluoralkylisierten Tensiden dadurch gekennzeichnet, dass die Reaktionsubstanzen den perfluoralkylisierten, alkophoben, wasserlöslichen Oligomeren ohne quaternäre Stickstoffatome entsprechen, besonders die Derivate des perfluoralkylisierten Polyalcanolamins, der perfluoralkylisierten Aminosäure und der perfluoralkylisierten Polyaminosäure und die der untenstehenden Formel gemäss sind :

$$R_F-(CH_2)_x-B-T-E$$

E =

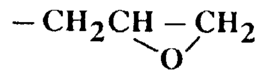

oder ein Wasserstoffatom

T =

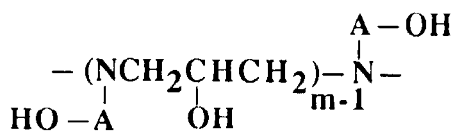

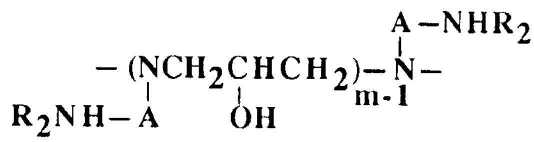

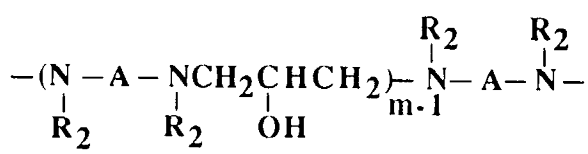

falls

E =

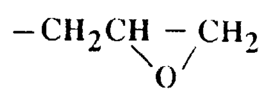

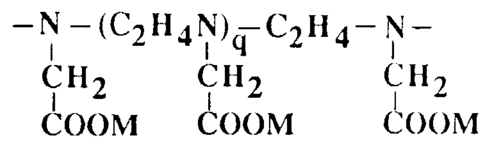

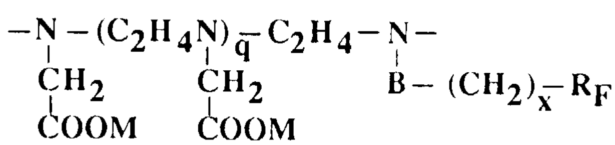

falls E = ein Wasserstoffatom mit $R_F$, A, B, m, x, q, $R_2$ und M definiert in Anspruch (1).

**8.** Gemäss den Ansprüchen (1), (2) und (3), sind die neuen perfluoralkylisierten Tensiden dadurch gekennzeichnet, dass sie in der Technik als alkophobe und oleophobe Elemente verwendet werden und hauptsächlich in den Zusammensetzungen von feuerlöschenden Schäumen, die imstande sind nicht nur entflammte Kohlenwasserstoffe sondern auch polare Flüssigkeiten (Alkohole, Esther, Äther u.s.w.) zu löschen.

## Claims

1. New water-soluble polyperfluoroalkyl surfactants, derived from functional polycarboxylic polymers, characterised by the fact they are not only oleophobic, but mainly with a strong alcophobic property, that they are compatible with anionic surfactant agents and protein derivatives, that their molecular structure has no organic quaternary nitrogen atom and has at least two perfluoroalkyl groups with from 4 to 20 carbon atoms bonded indirectly to the polymer's carboxylic functions through an ester or amide bond (in the case of an amidation bond, the nitrogen atom must have a hydrophilic group to promote alcophobia) and corresponding to the following general formula:

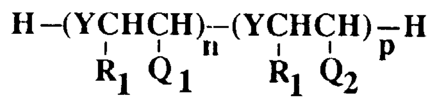

Y =

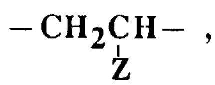

or a simple bond

$Q_1$ =

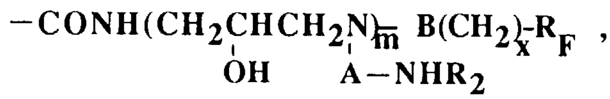

or

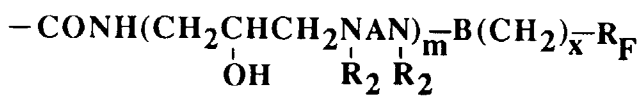

in all cases

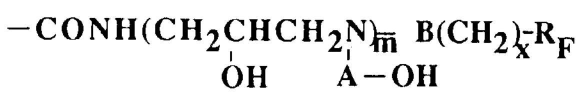

when A = alkylene -COOAR$_F$ ;

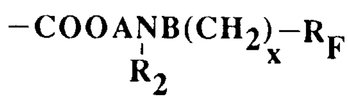

when

Y =

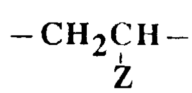

and A = alkylène;

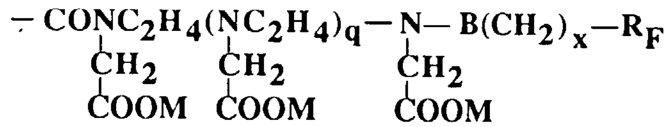

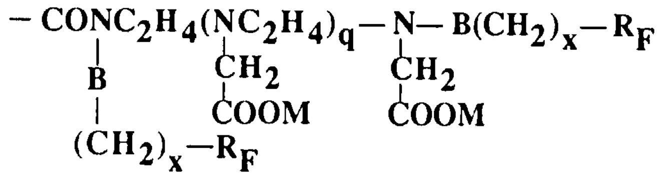

when

Y =

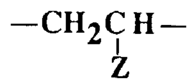

$Q_2$ = $-CONH_2$ in all cases and -COOM, $-COOWOR_3$,

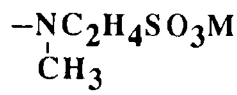

when

Y =

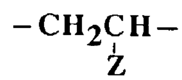 ;

$R_F$ = perfluoroalkyl $C_{4-20}$ ;

$R_1$ = -COOM when

Y =

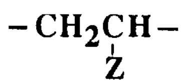

and -H when Y is a simple bond;

A = alkylene $C_{2-6}$ or another divalent group such as :

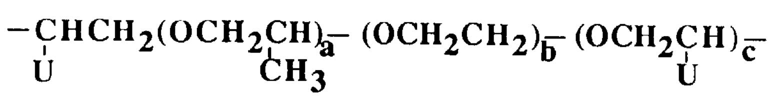 ,

$$-(CH_2CH_2NH)_q-CH_2CH_2-$$

when A is between two nitrogen atoms;

$R_2$ = $-CH_2COOM$, -H , alkyl $C_{1-4}$ ;

$R_3$ = phenyl,alkylphenyl,alkyl;

a = an integer from 0 to 60

b = an integer from 0 to 60, different from or equal to a and c

c = an integer from 0 to 60, different from or equal to a and b

n = an integer greater than 10

m = an integer from 0 to 20
l = an integer from 0 to 20, different from or equal to m
p = an integer different from or equal to n and greater than 10
q = an integer from 0 to 4
x = an integer from 0 to 4, different from or equal to q

B = $-SO_2$ , -CO when x = 0 à 4; or a simple bond when x = 1 to 4
W = $-(CH_2CH_2O)_l-CH_2CH_2-$
Z = phenyl, $OCH_3$, - H, $-CH_3$, $-C_2H_5$, $-CONH_2$, $-COOCH_3$ $-COOCH_3$, $-CH_2OOCCH_3$, - N- pyrrolidone;
U = -H or $-CH_3$
M = - H or an alkaline metal or $NH_4^+$ .

**2.** New polyperfluoroalkyl surfactants according to claim (1) in which the polycarboxylated polymer derivative is an ethylenic and maleic anhydride copolymer derivative.

**3.** New polyperfluoroalkyl surfactants according to claim (1) in which the polycarboxylated polymer derivative is a polyacrylic derivative.

**4.** Method for obtaining new polyperfluoroalkyl surfactants according to claim (2), characterised by the fact that the anhydride of the polycarboxylated polymer is opened by a perfluoroalkyl oligomer containing no organic quaternary nitrogen atom and carrying a mobile hydrogen function.

**5.** Method for obtaining new polyperfluoroalkyl surfactants according to claim (4), in which the perfluoroalkyl compound is a perfluoroalkyl ethanol, or a substitute N- perfluoroalkyl alkanolamine.

**6.** Method for obtaining new polyperfluoroalkyl surfactants according to claims (1), (2) and (3), characterised by the fact that an alcophobic perfluoroalkyl oligomer carrying an epoxide function reacts with an amide, derived from a polycarboxylic polymer.

**7.** Method for obtaining new polyperfluoroalkyl surfactants according to claims (4) and (6), in which the reaction-induced intermediates correspond to water-soluble alcophobic perfluoroalkyl oligomers, without any quaternary nitrogen atom, in particular derivatives of perfluoroalkyl polyalkanolamine, perfluoroalkyl amino acids and perfluoroalkyl polyamino acids, with the following general formula:

$$R_F-(CH_2)_x-B-T-E$$

E =

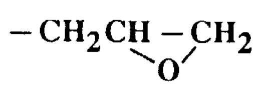

or a hydrogen atom

T =

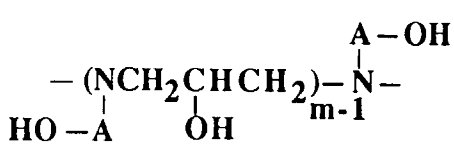

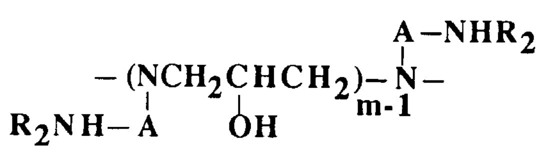

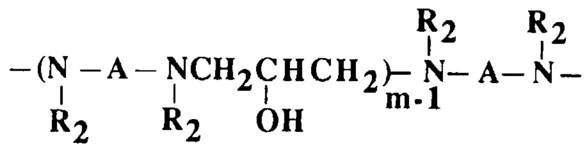

when
E =

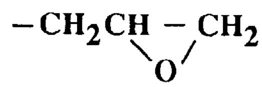

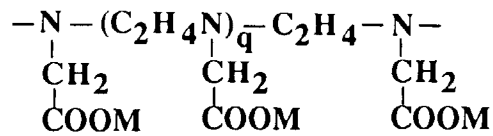

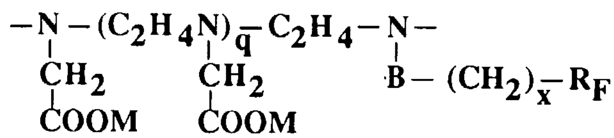

when E = a hydrogen atom
with $R_F$, A, B, m, x, q, $R_2$ and M defined in claim (1).

**8.** Application of new perfluoroalkyl surfactants, according to claims (1), (2) and (3), characterised by the fact they are used as alcophobic and oleophobic agents in the technique and especially in the composition of foam that is able to extinguish not only hydrocarbon fires but also those caused by polar liquids (alcohol, ethers, esters, etc.).